Europäisches Patentamt

European Patent Office

Office européen des brevets

(19)

(11) Veröffentlichungsnummer: **0 128 230**
**B1**

(12) # EUROPÄISCHE PATENTSCHRIFT

(45) Veröffentlichungstag der Patentschrift:
**17.09.86**

(21) Anmeldenummer: **83105643.7**

(22) Anmeldetag: **09.06.83**

(51) Int. Cl.⁴: **H 01 S 3/083**, G 01 C 19/64, H 01 S 3/08

(54) **Ringlaserkreisel.**

(43) Veröffentlichungstag der Anmeldung:
**19.12.84 Patentblatt 84/51**

(45) Bekanntmachung des Hinweises auf die Patenterteilung:
**17.09.86 Patentblatt 86/38**

(84) Benannte Vertragsstaaten:
**DE FR GB IT NL SE**

(56) Entgegenhaltungen:
**FR - A - 2 507 313**

**PROCEEDINGS OF SPIE, Band 157, 30.-31. S 78, Seiten 13-20, California, USA. K. THOMSON: "Integrated 3 axis gyro"**
**APPLIED OPTICS, Band 12, Nr. 7, Juli 1973, Seiten 1460-1466, New York, USA. J. J. ROLAND et al.: "Periodic faraday bias and lock-in phenomena in a laser gyro"**

(73) Patentinhaber: **HONEYWELL GMBH,**
**Kaiserleistrasse 55, D-6050 Offenbach am Main (DE)**

(72) Erfinder: **Baumann, Rainer, Dipl.-Phys., Kilianstädter Strasse 13, D-6454 Bruchköbel 2 (DE)**
Erfinder: **Hansli, Werner, Dipl.-Ing. FH, Moosbergstrasse 30, D-6100 Darmstadt (DE)**
Erfinder: **Frieling, Rudolf, Dr. Ing., A. Schweitzerstrasse 5, D-6450 Hanau 6 (DE)**
Erfinder: **Bolzmann, Bernd, Dr.rer.nat., Konrad-Adenauer-Strasse 18, D-6454 Bruchköbel (DE)**

(74) Vertreter: **Herzbach, Dieter et al, Honeywell Europe S.A. Holding KG Patent- und Lizenzabteilung Kaiserleistrasse 55 Postfach 184, D-6050 Offenbach am Main (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die vorliegende Erfindung bezieht sich auf einen Ringlaserkreisel nach dem Gattungsbegriff des Anspruches 1.

Bekannte Ringlaserkreisel dieser Art, bei denen der Laser in den Resonatorblock integriert ist, weisen eine Kathode auf, die mit einer Laserbohrung entlang eines Polygonzugs in Verbindung steht, und sie besitzten ferner zwei Anoden, die symmetrisch zur Kathode mit Laserbohrungen in Verbindung stehen, die sich entlang von benachbarten Polygonseiten erstrecken. Ein Ringlaserkreisel mit dreieckförmiger Laserstrecke, bei der die Kathode symmetrisch zur Basis des Dreiecks angeordnet ist und die Anoden auf den Schenkeln des Dreiecks angeordnet sind, ist aus der DE-OS 28 13 483 bekannt. Bei diesem bekannten Ringlaserkreisel sind alle drei Bohrungen als Gasentladungsrohre ausgeführt. Auch enge Fertigungstoleranzen des Resonatorblocks ermöglichen es in der Regel nicht, das Laserstrahlzentrum exakt durch die Mitte aller drei Bohrungen zu führen, was zu einer Verminderung der Laserverstärkung sowie zu einer Vergrösserung des Mitzieheffektes (Lock-in) führt. Die Einhaltung enger Fertigungstoleranzen verteuert andererseits die Herstellung des Ringlaserkreisels. Darüber hinaus wurde festgestellt, dass bei einer üblicherweise hier verwendeten Füllung des Lasers mit einem Gemisch aus Helium und Neon positiv geladene Helium- und Neon-Ionen von den Anoden zur Kathode wandern, wobei die schnellsten Ionen auf die Planspiegel des Resonators auftreffen und diese beschädigen, so dass die Leistung des Lasers herabgemindert wird. Schliesslich begrenzen die relativ engen Laserbohrungen das Füllgasvolumen des Lasers und somit dessen Lebensdauer.

Es ist daher die Aufgabe der vorliegenden Erfindung, einen Ringlaserkreisel der eingangs genannten Art so auszubilden, dass er bei relativ einfacher Herstellung gute Leistungsdaten aufweist. Die Lösung dieser Aufgabe gelingt gemäss den kennzeichnenden Merkmalen des Patentanspruches 1. Weitere vorteilhafte Ausgestaltungen der Erfindung sind den Unteransprüchen entnehmbar.

Von modular aufgebauten Ringlaserkreiseln ist es bereits bekannt, dass die in den Resonator eingesetzte Laserröhre nur eine Polygonseite bzw. einen Teil einer solchen Polygonseite besetzt. Ein derartiger Ringlaserkreisel ist beispielsweise in der älteren europäischen Patentanmeldung 83 101 921.1 dargestellt und beschrieben. Dort bildet jedoch die Laserröhre einen separaten Bestandteil des Ringlaserkreisels und die verbleibende Resonatorstrecke ist nicht gasgefüllt, so dass sich die eingangs geschilderten Probleme ohnehin nicht ergeben.

Anhand der Figuren der beiliegenden Zeichnung sei im folgenden ein Ausführungsbeispiel des erfindungsgemässen Ringlaserkreisels beschrieben. Es zeigen:

Fig. 1 eine schematische Draufsicht auf den Ringlaserkreisel gemäss der vorliegenden Erfindung;

Fig. 2a, 2b den Einfluss einer Verschiebung des sphärischen Umlenkspiegels auf die Projektion des Strahldreiecks in die ideale Laserebene; und

Fig. 3 eine Abwicklung des Strahldreiecks senkrecht zur idealen Laserebene.

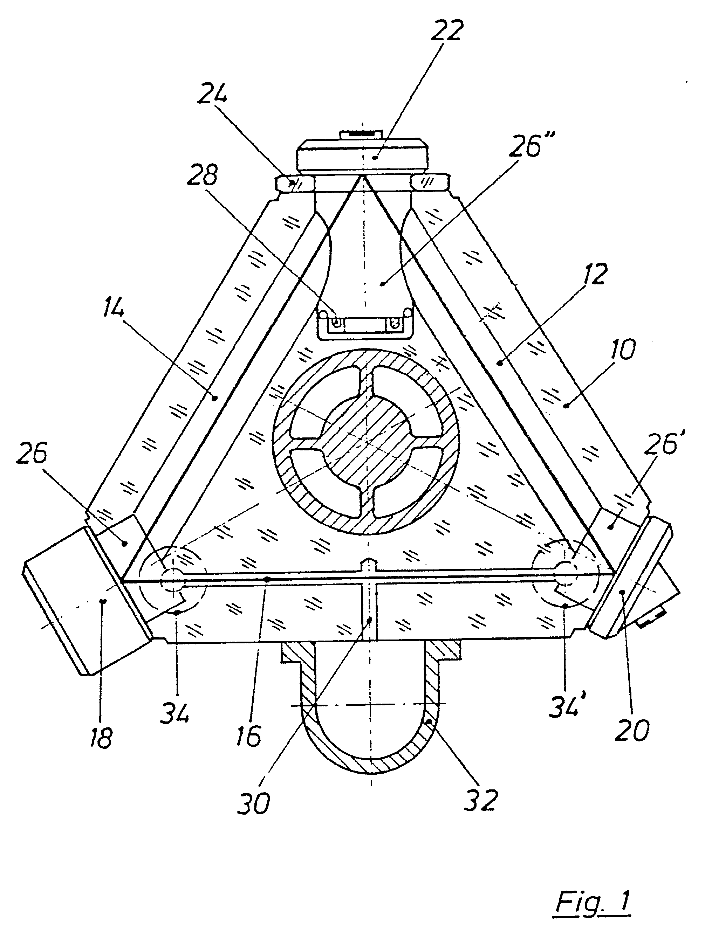

Gemäss Fig. 1 weist ein in seiner Grundform dreieckförmiger Resonatorblock 10 aus glaskeramischem Material drei Bohrungen 12, 14 und 16 auf, die in dem Resonatorblock 10 parallel zu den Seitenwänden des Dreiecks verlaufen. Die entlang der Grundlinie des Dreiecks verlaufende Bohrung 16 ist als relativ enge, exakte Laserbohrung ausgebildet, während die entlang der verbleibenden Seiten des Dreiecks verlaufenden Bohrungen 12 und 14 als Strahlbohrungen mit relativ grossem Durchmesser ausgebildet sind.

An den Ecken ist der dreieckförmige Resonatorblock 10 plangeschliffen und zwei Planspiegel 18, 20 sowie ein sphärischer Spiegel 22 befinden sich mit diesen Planflächen in optischem Kontakt, d.h. sie haften aufgrund molekularer Kräfte an diesen Planflächen. Der sphärische Spiegel 22 ist nicht unmittelbar an dem Resonatorblock 10 angebracht, sondern über eine zwischengefügte Ringplatte 24, die ebenfalls aus Glaskeramik besteht und deren Funktion noch zu erläutern sein wird.

Im Schnittpunkt der Strahlbohrungen 12 und 14 bzw. der Laserbohrung 16 mit den Strahlbohrungen 12 und 14 ist der Resonatorblock 10 mit Strahl-Freibohrungen 26, 26' und 26'' versehen. In der Strahl-Freibohrung 26'' ist ein Getter 28 angeordnet.

Symmetrisch zur Laserbohrung 16 ist eine mit dieser in Verbindung stehende Kathodenbohrung 30 in dem Resonatorblock 10 angebracht, die von einer domförmigen Kathode 32 aus Metall überdeckt wird. In der Nähe beider Enden der Laserbohrung 16 sind Anoden 34, 34' aus Metall angeordnet, die über nicht dargestellte Bohrungen mit der Laserbohrung 16 in Verbindung stehen, so dass zwischen Kathode 32 und Anoden 34, 34' zwei gerade gegenläufige Gasentladungsstrecken vorgegeben sind. Im Prinzip könnten die Anoden auch auf den Seiten des Dreiecks angeordnet sein. Eine der Metallelektroden wird vorzugsweise mit einem abquetschbaren Füllstützen für das Lasergas versehen.

Hinsichtlich der Spiegel ist der Planspiegel 18 in bekannter Weise mittels eines piezoelektrischen Antriebs parallel verschiebbar und dient als Resonatorlängenstellglied. Hinter dem Planspiegel 20 wird das als Interferenzsignal vorliegende Messsignal ausgelesen. An dem sphärischen Spiegel 22 wird ein Sensor zur Erfassung der Strahlintensität angebracht und das Sensorsignal wird zur Resonatorlängenregelung mittels des parallel verschiebbaren Spiegels 18 herangezogen.

Der gesamte Resonatorblock 10 ist an einer Torsionsfeder befestigt, um in bekannter Weise über einen Antrieb in Zitterschwingungen versetzt zu werden, was eine Signalauswertung auch unterhalb der Mitziehschwelle ermöglicht.

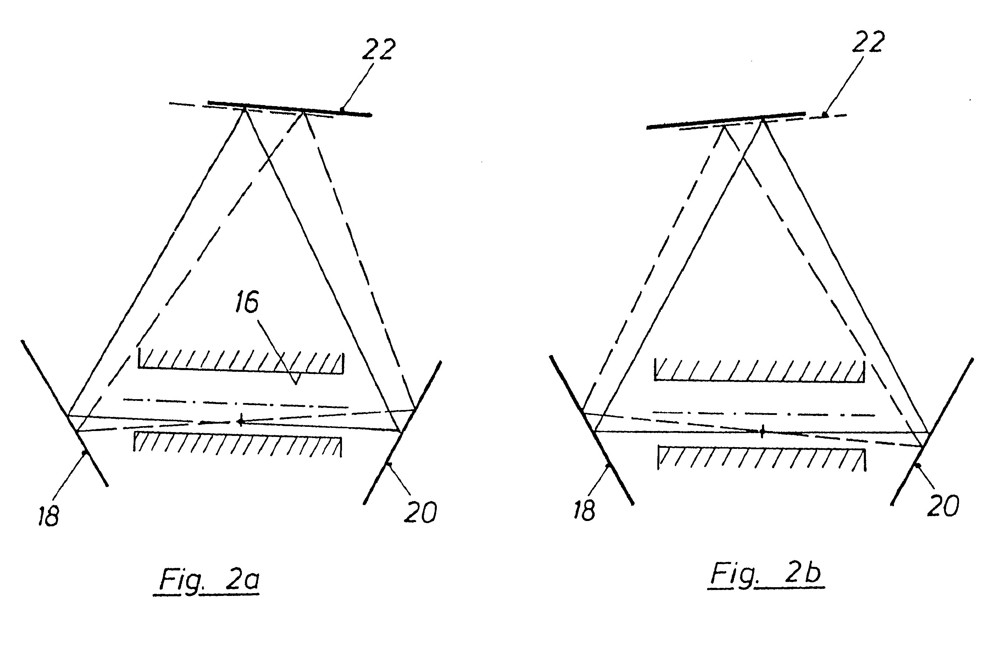

Fertigungsfehler des Resonatorblocks 10 führen zu einem Versatz des Laserstrahl-Zentrums in bezug auf die Bohrungen 12-16, wodurch normalerweise der Mitzieheffekt vergrössert wird. Wie aus den Figuren 2a und 2b ersichtlich, kann das Strahldreieck durch Parallelverschiebung des sphärischen Spiegels 22 in der Laserebene in seiner Form und Lage verändert werden. Der Verlauf des Laserstrahlzentrums vor einer Verschiebung des sphärischen Spiegels 22 ist jeweils gestrichelt dargestellt, während der Verlauf des Laserstrahls nach einer korrigierenden Querverschiebung des sphärischen Spiegels 22 durch ausgezogene Linien dargestellt ist. Man erkennt, dass durch eine solche Querverschiebung des sphärischen Spiegels 22 der durch die Laserbohrung 16 verlaufende Laserstrahl jeweils um seine Mitte gedreht wird. Es bleibt jedoch immer ein Parallelversatz Δh gegenüber der Mittellinie der Laserbohrung 16. Dieser Parallelversatz Δh lässt sich jedoch aus den Fertigungsmassen eines Blockes mit Fertigungsfehlern errechnen und er kann durch die gesondert gefertigte Ringplatte 24 völlig kompensiert werden.

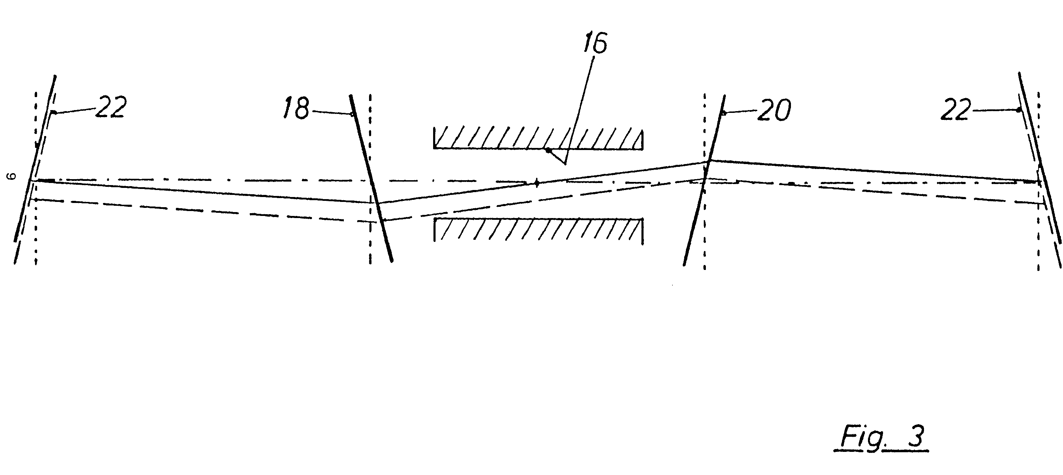

Durch eine Längsverschiebung des sphärischen Spiegels 22 senkrecht zur Laserebene, d.h. in die Zeichenebene hinein bzw. aus dieser heraus, wird der Laserstrahl senkrecht verschoben, aber er kann in diesem Fall nicht verdreht werden. Diese Verhältnisse sind in der Abwicklung des Laserdreiecks in Fig. 3 dargestellt. Diese nichtkompensierbare Verdrehung senkrecht zur Laserebene wird verursacht durch den Pyramidalfehler der beiden Planspiegel. Diese Pyramidalfehler sind daher neben der Laserbohrung die einzigen eng zu tolerierenden Grössen bei dem vorliegenden Ringlaserkreisel. Alle übrigen Fehler lassen sich bei dem erfindungsgemässen Ringlaserkreisel kompensieren.

## Patentansprüche

1. Ringlaserkreisel mit einem Resonatorblock (10) zur Vorgabe einer polygonförmigen, insbesondere dreieckförmigen, gasgefüllten Laserstrecke mittels in dem Resonatorblock angeordneten Bohrungen (12, 14, 16) und mit einer Kathode (32) sowie in gleichen Abständen von dieser angeordneten Anoden (34, 34') zur Erzeugung von zwei gegenläufigen Laserstrahlen in den Bohrungen, dadurch gekennzeichnet, dass sich die durch die Kathode (32) und die Anoden (34, 34') gebildete Gasentladungsstrecke (16) nur über eine Polygonseite erstreckt.

2. Ringlaserkreisel nach Anspruch 1, dadurch gekennzeichnet, dass die Gasentladungsstrecke als enge, exakte Laserbohrung (16) ausgebildet ist und dass die verbleibenden Bohrungen als verbreiterte Strahlbohrungen (12, 14) ausgebildet sind.

3. Ringlaserkreisel nach Anspruch 2, dadurch gekennzeichnet, dass in den Eckpunkten des Polygons der Resonatorblock (10) mit Spiegel-Freibohrungen (26, 26', 26'') versehen ist.

4. Ringlaserkreisel nach Anspruch 1, bei dem der die dreieckförmige Laserstrecke einschliessende Resonator durch zwei Planspiegel (18, 20) und einen sphärischen Spiegel (22) gebildet wird, die sich mit Planflächen in den Eckpunkten des Resonatorblocks (10) in optischem Kontakt befinden, gekennzeichnet durch eine Ringplatte (24) mit vorgebbarer Dicke zwischen dem sphärischen Spiegel (22) und der zugeordneten Planfläche.

5. Ringlaserkreisel nach Anspruch 3, gekennzeichnet durch einen Getter (28) in einer der Spiegel-Freibohrungen (26, 26', 26'').

## Claims

1. Ring laser gyro comprising a resonator block (10) for providing a polygon-shaped, in particular triangular-shaped, gas-filled laser path by means of borings (12, 14, 16) within said resonator block and comprising a cathode (32) as well as anodes (34, 34') equally spaced from said cathode for generating two counterpropagating laser beams within said borings, characterized in that the gas discharge path (16) formed by said cathode (32) and said anodes (34, 34') only extends via one polygon side.

2. Ring laser gyro according to claim 1, characterized in that the gas discharge path is formed by a narrow and exact laser boring (16) and that the remaining borings are formed by enlarged beam borings (12, 14).

3. Ring laser gyro according to claim 2, characterized in that the resonator block (10) in the corner points of said polygon is provided with beam path connecting bores (26, 26', 26'').

4. Ring laser gyro according to claim 1, at which the resonator enclosing the triangular-shaped laser path is formed by two plane mirrors (18, 20) and a spherical mirror (22) with said mirrors comprising plane surfaces being in optical contact with the corner faces of said resonator block (10), characterized by a ring plate (24) of predetermined thickness between the spherical mirror (22) and its plane surface.

5. Ring laser gyro according to claim 3, characterized by a getter (28) within one of said beam path connecting bores (26, 26', 26'').

## Revendications

1. Gyroscope à anneau laser comprenant un bloc résonateur (10) destiné à former un trajet laser rempli de gaz de forme polygonale, notamment triangulaire au moyen d'alésages (12, 14, 16) ménagés dans le bloc résonateur, et une cathode (32) ainsi que des anodes (34, 34') disposées à égale distance de cette dernière en vue de générer dans les alésages deux rayons laser de sens contraire, caractérisé en ce que le trajet à décharge de gaz (16) formé par la cathode (32) et les anodes (34, 34') s'étend uniquement d'un côté du polygone.

2. Gyroscope à anneau laser selon la revendication 1, caractérisé en ce que le trajet à décharge de gaz est un alésage étroit de précision et que les autres alésages sont des alésages élargis de rayonnement (12, 14).

3. Gyroscope à anneau laser selon la revendication 2, caractérisé en ce que des alésages libres à miroir (26, 26', 26'') sont ménagés dans le bloc résonateur (10) aux points angulaires du polygone.

4. Gyroscope à anneau laser selon la revendication 1, sur lequel le résonateur enfermant le trajet laser de forme triangulaire est formé par deux miroirs plans (18, 20) et un miroir sphérique (22) qui sont en contact optique avec des surfaces planes aux points angulaires du bloc résonateur (10), caractérisé par une plaque circulaire (24) à épaisseur prédéterminable disposée entre le miroir sphérique (22) et la surface plane associée.

5. Gyroscope à anneau laser selon la revendication 3, caractérisé par un getter (28) logé dans l'un des alésages libres à miroir (26, 26', 26'').

_Fig. 1_

Fig. 2a

Fig. 2b

0 128 230

*Fig. 3*